# EUROPEAN PATENT SPECIFICATION

(11) **EP 0 634 089 B1**
(45) Date of publication and mention of the grant of the patent: **17.03.1999**
(21) Application number: 94610038.5
(22) Date of filing: 04.07.1994
(51) Int. Cl.: A01D 34/63

(54) **Mower comprising two cutter bars lying in end to end relationship**
Mähwerk mit zwei Mähbalken, deren Längsachsen miteinander fluchten
Faucheuse avec deux barres de coupe qui s'alignent l'un avec l'autre

(30) Priority: 13.07.1993 DK 83893
(43) Date of publication of application: 18.01.1995
(73) Proprietor: JF-FABRIKEN - J. FREUDENDAHL A/S, DK-6400 Sonderborg (DK)
(72) Inventor: Freudendahl, Jorn, DK-6400 Sonderborg (DK); Nielsen, Harald Raun, DK-6470 Sydals (DK)
(74) Representative: Raffnsoee, Knud Rosenstand

(56) References cited:
- DE-A- 2 426 209
- US-A- 5 060 462
- US-A- 5 107 663

## Description

The invention relates to a mower comprising two cutter bars lying in end to end relationship with rotating cutter means, such as cutter discs, with knives rotating in one plane, said cutter bars being suspended in relation to a common frame with a vertical degree of freedom, the two ends of each cutter bar being to a certain degree independently movable, and the adjacent ends of the two cutter bars being connected by means of a hinge.

A mower of this type is known from DK-B-162.320 and the corresponding DE-A-30 17 856 which discloses a mower with a cutter bar mounted in a frame, said cutter bar being divided in the middle in two half parts which are mutually connected by means of a hinge placed under the rotating plane of the knives. Here it is a question of a strong hinge which ensures that the two cutter bar halves cannot turn in relation to each other transversely to the hinge axis.

The division of the cutter bar in at least two halves as disclosed in the Danish published specification is among other things made to make the cutter bar adjustable to the surface of a field by bending in the hinge. This adjustment to the field surface is particularly important for mowers having a big width. Such a mower with a big width is known from Applicant's DK-A-251/93, which describes a mower with two working aggregates each comprising a frame part, in which a cutter bar is suspended. The frame part is by means of substantially horizontal parallellogram arms suspended in a carrier frame, the frame part being movable substantially vertically relative to the carrier frame. The frame parts of the two working aggregates are connected, and it is therefore not possible for the two cutter bars to turn relative to each other in order to adjust themselves to a not plane field surface. In order to introduce such a possibility for adjustment it is desirable to omit the connection between the frame parts of the working aggregates and instead hinge the two cutter bars relative to each other as described by way of introduction to ensure that they and in particular their knife means cannot collide.

Use of the hinge described in DK-B-162.320 in connection with a modification of the mower according to DK-A-251/93 would, however, entail several drawbacks: thus, it is generally a drawback that the hinge is placed below the rotational plane of the knives, because this entails that the distance between the outermost adjacent cutter means on the to cutter bars has to be bigger than the distance between two adjacent cutter means on a cutter bar. Besides, a hinge of the kind described in the published specification might transfer big torsional forces between the two cutter bars, the hinge as well as the cutter bars becoming thereby undesirably stressed.

To avoid the above drawbacks a mower according to the invention is characteristic in that the hinge comprises a ball joint and in that the ball joint is placed substantially in the rotating plane of the knives. By ball joint is to be understood any joint with a rotational axis and a certain mobility around the two axis perpendicular thereto.

The ball joinst naturally has to be placed outside the path of the knives and is preferably placed behind it. The hinge axis of the ball joint is preferably in the rotating plane of the knives and extends between the adjacent outermost cutter means on the two cutter bars.

The centre distance between the adjacent outermost cutter means on the two cutter bars preferably corresponds to the centre distance between two adjacent cutter means on a cutter bar.

In a particular embodiment the two cutter bars form in combination an obtuse angle in the horizontal plane, and the horizontal component of the hinge axis of the ball joint is in this embodiment preferably coincident with the bisector of the obtuse angle.

The invention will be explained in detail in the following by means of embodiments with reference to the drawing, in which
Fig. 1 shows the adjacent ends of two cutter bars lying end to end, seen from above,
Fig. 2 the same as Fig. 1, but seen from behind,

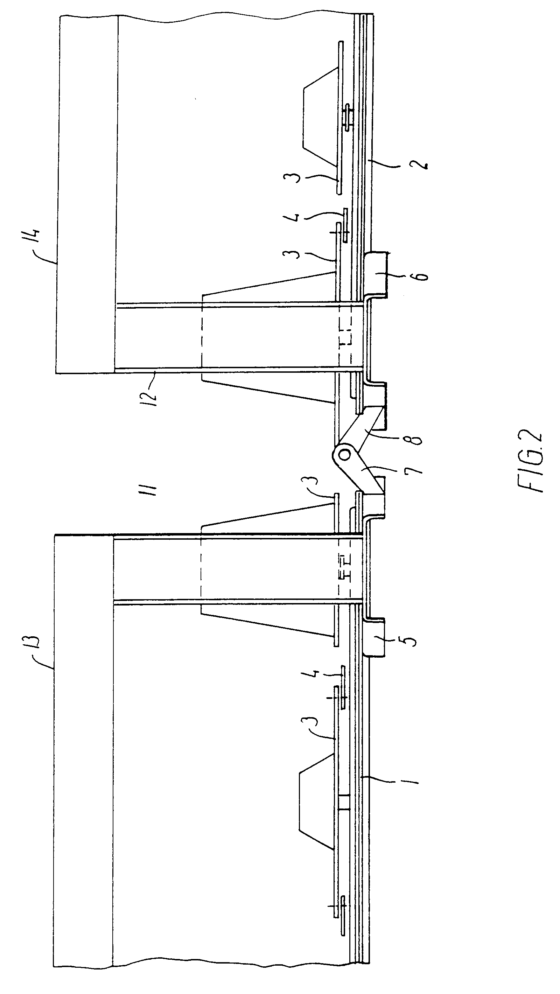

Fig. 2 a view from above of an embodiment, in which the two cutter bars are angular relative to each other,

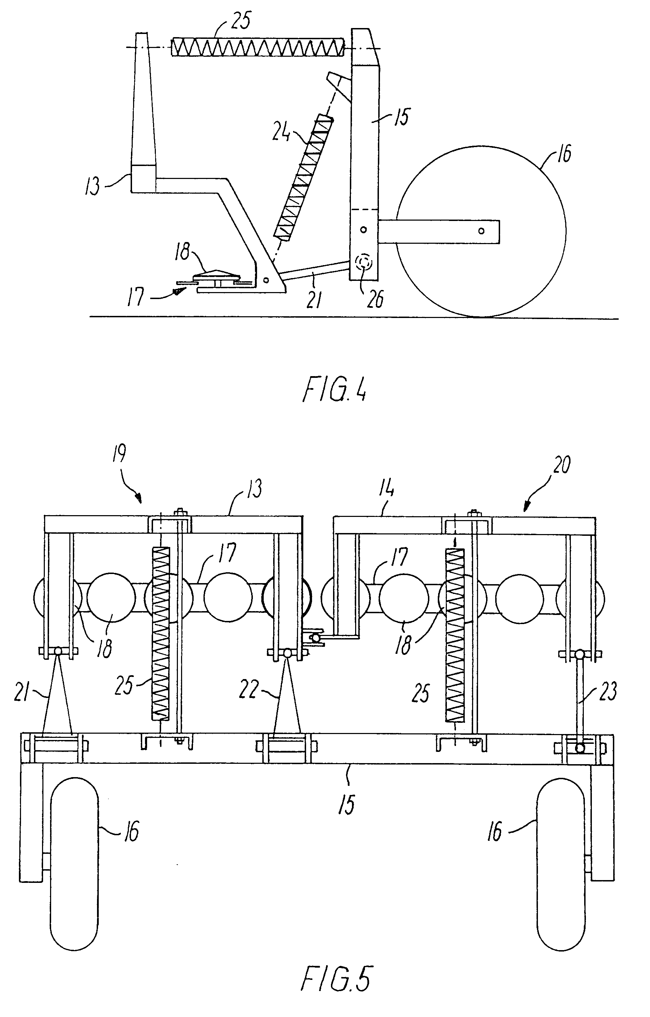

Fig. 4 a schematic partial side view of a mower according to the invention, and
Fig. 5 the mower in Fig. 4 seen from above.

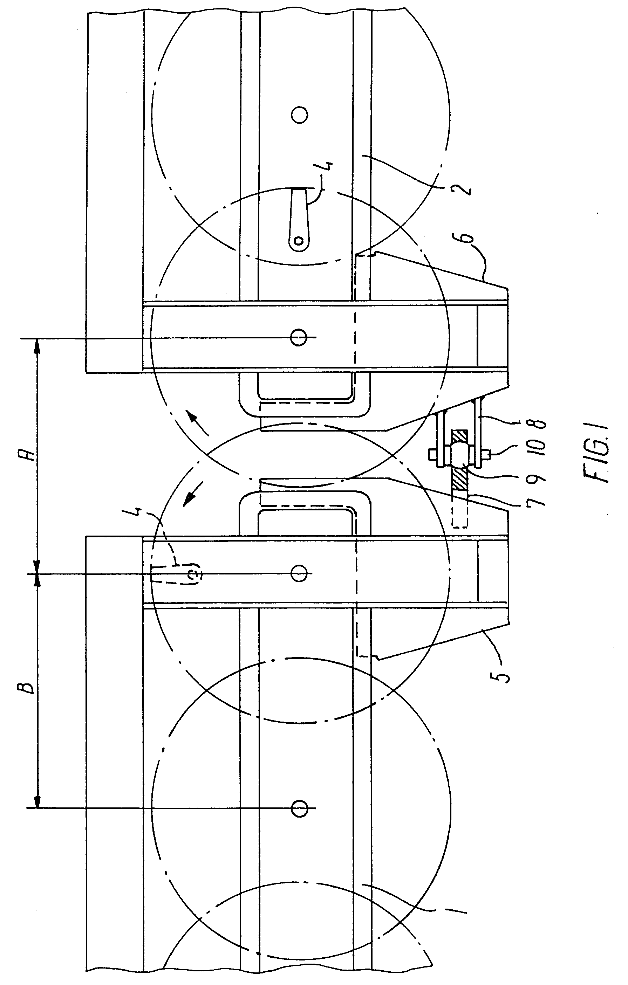

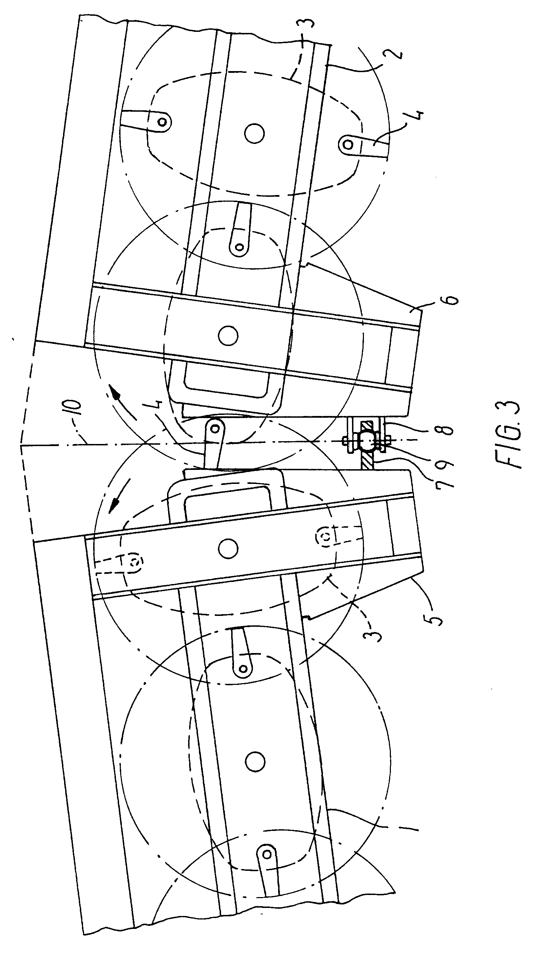

The figures show the ends of two cutter bars 1 and 2, on which cutter discs 3 with knives 4 are mounted. In Fig. 1 only the circles described by the ends of the knives 4 are shown, whereas in Fig. 3 also the outline of the substantially oval cutter discs 3 is shown.

On the cutter bars 1 and 3 consoles 5 and 6 are mounted, with which arms 7 and 8 are connected, said arms being connected by means of a ball joint 9 of a per se known type. Alternatively, another type of joint with a corresponding mobility can be used. The axis 10 of the ball joint lies in or close to the rotating plane of the knives 4 and extends perpendicularly to the longitudinal direction of the cutter bars 1 and 2.

Profile bars 11, 12 extend from the consoles 5 and 6 up to frame members 13, 14. These will be mounted in a common carrier frame in such a way that they can move vertically, but practically not horizontally. The mounting may for instance take place by means of parallellogram arms and in such a way that the ends shown of the cutter bars 1 and 2 can each move up and down independently of the ends not shown in the drawing.

The ball joint connection shown ensures that there is no risk of collision between the knives 4 of the outermost adjacent knife discs 3 of the two cutter bar ends, even though the two cutter bars tilt relative to each other in the vertical plane. That no angling of the two cutter bars relative to each other in horizontal plane takes place, must be ensured by the respective suspension of the cutter bars.

In Fig. 3 an embodiment of the invention is shown, in which the two cutter bars 1,2 form an obtuse angle. In this case the axis 10 of the ball joint 9 is coincident with the bisector of the obtuse angle.

In the embodiments shown the centre distance A between the two outermost adjacent knife discs 3 of the two cutter bars 1,2 is substantially equal to the centre distance B of two adjacent knife discs 3 on a cutter bar.

Fig. 4 and 5 show a mower comprising a carrier frame 15 with ground wheels 16. In the carrier frame 15 two windrower aggregates comprising frame members 13, 14 and cutter bars 17 with knife discs 18 are suspended.

The windrower aggregates 19, 20 is suspended in the carrier frame 15 by means of articular bars 21, 22, 23 and springs 24, 25. The articular bars 21 and 22 are connected with the carrier frame 15 by means of hinges 26 with horizontal axis transversely to the driving direction to ensure stability sideways, while they are connected with the windrower aggregate 19 by means of a ball joint to ensure flexibility in the suspension as a whole. The suspension of the windrower aggregate 19 mentioned here shortly is the object of another Danish patent appplication filed by the present applicant on the same day as the present application. The windrower aggregate 20 is by means of the articular bar 23 connected with the carrier frame 15 by two ball joints. Besides, the two windrower aggregates 19,20 are mutually connected by means of a ball joint 9 corresponding to the one shown in Figs. 1 and 2. By this mounting of the windrower aggregates 19,20 relative to the carrier frame 15, a very high degree of flexibility and surface adaptability of the windrower aggregates is attained.

## Claims

1. A mower comprising two cutter bars (1,2) lying in end to end relationship with rotating cutter means, such as cutter discs (3), with knives (4) rotating in one plane, said cutter bars (1,2) being suspended in relation to a common frame with a vertical degree of freedom, the two ends of each cutter bar (1,2) being to a certain degree independently movable, and the adjacent ends of the two cutter (1,2) bars being connected by means of a hinge (9), **characterized** in that the hinge comprises a ball joint (9) and in that the ball joint (9) is placed substantially in the rotating plane of the knives (4).

2. A mower according to claim 1, **characterized** in that the ball joint (9) is placed immediately behind the path of the knives (4).

3. A mower according to claim 1 or 2, **characterized** in that the hinge axis (10) of the ball joint (9) is positioned substantially in the rotating plane of the knives (4) and extends between the adjacent uttermost cutter means (3) of the two cutter bars (1,2).

4. A mower according to claims 1-3, **characterized** in that the centre distance (A) between the adjacent uttermost cutter means (3) on the two cutter bars (1,2) substantially corresponds to the centre distance (B) between two adjacent cutter means on a cutter bar.

5. A mower according to claims 1-4, **characterized** in that the two cutter bars (1,2) in combination form an obtuse angle in a horizontal plane.

6. A mower according to claim 5, **characterized** in that the horizontal component of the hinge axis (10) of the ball joint (9) is substantially coincident with the bisector of the obtuse angle.

## Patentansprüche

1. Mähmaschine umfassend zwei in Verlängerung zueinander liegende Mähbalken (1, 2) mit rotierenden Schneidmitteln, wie etwa Messerscheiben (3) mit in einer Ebene rotierenden Messern (4), welche Mähbalken (1, 2) im Verhältnis zu einem gemeinsamen Rahmen mit einem senkrechten Freiheitsgrad aufgehängt sind, wobei die aneinanderliegenden Enden der beiden Mähbalken (1, 2) mittels eines Gelenks (9) verbunden sind, dadurch **gekennzeichnet**, dass das Gelenk ein Kugelgelenk (9) ist, und dass das Kugelgelenk (9) im wesentlichen in der Rotationsebene der Messer (4) plaziert ist.

2. Mähmaschine nach Anspruch 1, dadurch **gekennzeichnet**, dass das Kugelgelenk (9) unmittelbar hinter der Bahn der Messer (4) plaziert ist.

3. Mähmaschine nach Anspruch 1 oder 2, dadurch **gekennzeichnet**, dass sich die Gelenkachse (10) des Kugelgelenks (9) im wesentlichen in der Rotationsebene der Messer (4) befindet und zwischen den nebeneinanderliegenden äussersten Schneidmitteln (3) der beiden Mähbalken (1, 2) verläuft.

4. Mähmaschine nach Anspruch 1-3, dadurch **gekennzeichnet**, dass der Mittelabstand (A) zwischen den nebeneinanderliegenden äussersten Schneidmitteln (3) auf den beiden Mähbalken (1, 2) im wesentlichen dem Mittelabstand (B) zwei nebeneinanderliegender Schneidmittel auf einem Mähbalken entspricht.

5. Mähmaschine nach Anspruch 1-4, dadurch **gekennzeichnet**, dass die zwei Mähbalken (1, 2) untereinander einen stumpfen Winkel in waagrechter Ebene bilden.

6. Mähmaschine nach Anspruch 5, dadurch **gekennzeichnet**, dass die waagrechte Komposante der Gelenkachse (10) des Kugelgelenks (9) im wesentlichen mit der Halbierungslinie des stumpfen Winkels zusammenfällt.

## Revendications

1. Faucheuse comportant deux barres de coupe (1,2) qui s'alignent l'une avec l'autre et présentent des organes rotatifs de coupe, tels que disques de coupe (3) à couteaux (4) en rotation dans un plan, lesdites barres de coupe (1, 2) étant suspendues à un cadre commun avec un certain degré de liberté en sens vertical, les deux extrémités-de chaque barre de coupe (1, 2) étant, à un certain degré, indépendemment mobiles, et les extrémités adjacentes des deux barres de coupe (1, 2) étant reliées l'une à l'autre à l'aide d'une charnière (9), caractérisée en ce que la charnière comporte un joint à rotule (9) et que le joint à rotule (9) est essentiellement situé dans le plan de rotation des couteaux (4).

2. Faucheuse selon la revendication 1, caractérisée en ce que le joint à rotule (9) est situé immédiatement derrière le trajet des couteaux (4).

3. Faucheuse selon les revendications 1 ou 2, caractérisée en ce que l'axe d'articulation (10) du joint à rotule (9) est situé essentiellement dans le plan de rotation des couteaux (4) et s'étend entre les deux organes adjacents d'extrémité de coupe (3) des deux barres de coupe (1, 2).

4. Faucheuse selon les revendications 1 à 3, caractérisée en ce que la distance centrale (A) entre les deux organes adjacents d'extrémité de coupe (3) des deux barres de coupe (1, 2) correspond essentiellement à la distance centrale (B) entre deux organes adjacents de coupe d'une barre de coupe.

5. Faucheuse selon les revendications 1 à 4, caractérisée en ce que les deux barres de coupe (1, 2) forment mutuellement un angle obtus dans un plan horizontal.

6. Faucheuse selon la revendication 5, caractérisée en ce que la composante horizontale de l'axe d'articulation (10) du joint à rotule (9) coïncide essentiellement avec la bissectrice de l'angle obtus.
